# EUROPEAN PATENT APPLICATION

(11) **EP 1 624 680 A2**
(43) Date of publication of application: **08.02.2006**
(21) Application number: 05254799.9
(22) Date of filing: 30.07.2005
(51) Int. Cl.: H04N 5/76

(54) **Video reproducing method, medium and apparatus selecting playback start position**

(30) Priority: 04.08.2004 KR 2004061377
(71) Applicant: SAMSUNG ELECTRONICS CO., LTD., Suwon-si, Gyeonggi-do (KR)
(72) Inventor: Park, Jeong-choul, Yeongdeungpo-gu Seoul (KR)
(74) Representative: Brandon, Paul Laurence

(57) **Abstract**

A reproducing method, medium, and apparatus selecting a playback start position. The method can include the applying of a signal requesting a list of programs stored in a randomly accessible storage (120), the generating of a program list screen (400), the program list screen displaying a list of the programs stored in the storage, a thumbnail image corresponding to a first playback start position of any one program selected from the list, and information of where the thumbnail image (420) is present in the total length of the selected program, and the displaying of the generated program list screen. Accordingly, users may confirm a thumbnail image to select a playback start position, so that users may readily select a playback position where they may have previously watched.

## Description

The present invention relates to reproducing methods, media, and apparatus.

A reproducing apparatus such as a Digital Video Disk Player (DVDP) and Video Cassette Recorder (VCR) combination system, which has been developed to allow composite functions of the DVDP and the VCR to both be performed, has also typically employed a randomly accessible mass storage medium, e.g., a hard disk drive (HDD).

The reproducing apparatus employing the HDD, for example, can allow a playback operation to be performed consecutively from a paused position by selecting a playback key or by pausing the playback operation by way of a pause key and selecting the pause key again. However, the conventional reproducing apparatus does not allow the playback operation to be performed consecutively from a stopped position when reproduction was stopped during playback of the program file.

According to the conventional reproducing apparatus, when the playback operation is stopped, the reproduction cannot be consecutively performed from the stopped position, whereas the reproduction should be performed from the initial playback start position.

As a result, when the playback operation is stopped, while the playback has not completed in addition to the case when the playback operation has stopped, there is a need for a way to search the stopped playback position at a fast speed to permit consecutive reproduction.

It is therefore an aim of preferred embodiments of the present invention to provide a reproducing method, medium, and apparatus allowing a user to readily select a playback start position by using stop history information with respect to a portion where the playback is stopped.

The present invention provides a reproducing apparatus, including a first storage to store a plurality of program files, a second storage to store stop history information corresponding to each of the program files, a screen generation unit to generate a program list screen displaying a list of the plurality of the program files and information of a playback start position of any one program file selected from the program list screen, a display unit to display the generated program list screen, and a controller to control the program list screen to be displayed on the display unit upon receipt of a signal requesting the program list screen, the program list screen including a thumbnail image corresponding to a first playback start position of the selected program file, generated based on the list of program files and corresponding stop history information, and information of a first playback start position corresponding to the thumbnail image and a total length of the selected program file.

The apparatus may further include an input unit for initiating the signal requesting the program list screen and/or selecting the one program file from the program list screen. The input unit may further be a remote control.

The corresponding stop history information may include information of the playback stop position of the selected program file, information of reproduced time until a corresponding playback was stopped for the selected program file, and information of a date and time when the corresponding playback stop of the selected program file was requested. In addition, the first playback start position may be where corresponding date and time information is latest among other stop positions where playback was stopped.

The controller may process information of at least one second playback start position present before and/or after the first playback start position, to be displayed in the program list screen, when at least one stop position is present in the selected program. Further, the controller may control the thumbnail image displayed on the program list screen to be changed to a thumbnail image corresponding to another playback start position upon receipt of a signal requesting a move to any one of the at least one second playback start positions.

In addition, the first storage may be a hard disk drive separate from the second storage. Further, the second storage may also be an allocated region of a recording area of the hard disk drive.

The apparatus may further include an AV codec to output the one selected program file to a video output terminal and/or an audio output terminal.

The present invention further provides a method of reproducing a program, including requesting a list of programs stored in a randomly accessible storage, generating a program list screen displaying a list of the programs stored in the storage, a thumbnail image corresponding to a first playback start position of any one program selected from the list of programs, and information corresponding to a position of the thumbnail image relative to a total length of the selected one program, and displaying the generated program list screen.

The method may further include applying a signal from an input unit for initiating a signal requesting the program list screen and/or selecting the one program from the program list screen. The signal from the input unit may be applied remotely.

Information of the first playback start position may be generated based on stop history information corresponding to the selected program. Further, the stop history information may include information of a position where a playback of the selected program was stopped, information of reproduced time until the playback of the selected program was stopped, among a total length of the selected program, and information of date and time when the playback stop of the selected program was requested. The first playback start position may also correspond to a latest stopped date and time among at least one stop position of the selected program.

The program list screen may further include information of at least one second playback start position present before and/or after the first playback start position. The thumbnail image displayed on the program list screen may further be changed to a thumbnail image corresponding to a changed playback start position of any one of the at least one second playback start position.

The method may further include outputting the one selected program to a video output terminal and/or an audio output terminal.

The present invention also provides at least one medium including computer readable code implementing embodiments of the present invention.

The present invention will become apparent and more readily appreciated from the following description of the embodiments, by way of example only, taken in conjunction with the accompanying drawings of which:
FIG. 1 illustrates a reproducing apparatus, according to an embodiment of the present invention;
FIG. 2 illustrates a portion of a remote control, such as that shown in FIG. 1, according to an embodiment of the present invention;
FIG. 3 is a flowchart for reproducing data stored in a hard disk drive (HDD), according to an embodiment of the present invention;
FIG. 4 illustrates a program list screen displayed when a program list key provided in a remote control is selected, according to an embodiment of the present invention; and
FIGS. 5 and 6 illustrate program list screens to be changed when a direction key of a remote is selected when the program list screen is displayed, according to an embodiment of the present invention.

Reference will now be made in detail to embodiments of the present invention, examples of which are illustrated in the accompanying drawings, wherein like reference numerals refer to the like elements throughout. The embodiments are described below to explain the present invention by referring to the figures.

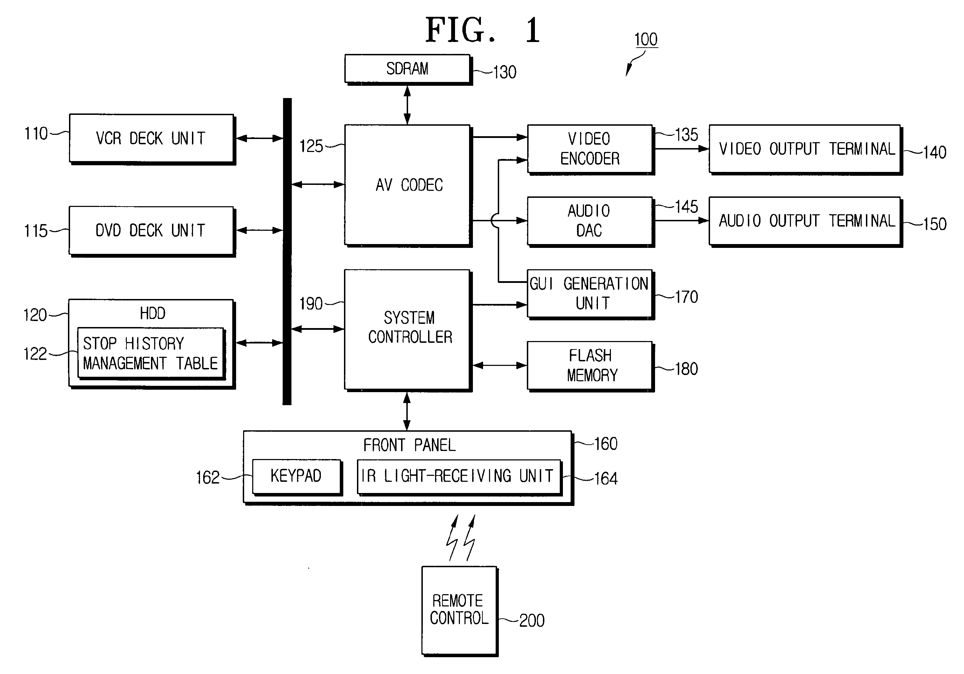

FIG. 1 illustrates a reproducing apparatus, according to an embodiment of the present invention, noting that embodiments of the present invention are not limited to the same

In this embodiment, a combination having a VCR, DVDP, and HDD can be described as a reproducing apparatus 100.

As this is only an example of the reproducing apparatus 100, it is further noted that the reproducing apparatus 100, according to other embodiments of the present invention, does not need to have all of the VCR, DVDP, and HDD components in one set. However, the reproducing apparatus 100 should preferably have a storage that is randomly accessed. Accordingly, it should be apparent that embodiments of the present invention may be applied to at least all reproducing apparatuses which employ a storage capable of being randomly accessed.

As shown in FIG. 1, the reproducing apparatus 100 may include a VCR deck unit 110, a DVD deck unit 115, a HDD 120, an audio-visual (AV) coding and decoding (CODEC) 125, a static random access memory (SDRAM) 130, a video encoder 135, a video output terminal 140, an audio digital-to-analog converter (DAC) 145, an audio output terminal 150, a front panel 160, a graphical user interface (GUI) unit 170, a flash memory 180, and a system controller 190.

The VCR deck unit 110 can be controlled by the system controller 190, and may read out and output data recorded in a loaded magnetic tape. Data read out by the VCR deck unit 110 can then be provided to the AV CODEC 125.

The DVD deck unit 115 can also be controlled by the system controller 190, and may read out and output data recorded in a loaded optical disk, that is, a DVD, for example. Data read out by the DVD deck unit 115 can then be provided to the AV CODEC 125.

The HDD 120 can be a mobile recording medium, and store a plurality of program files, e.g., video program files. A stop history management table 122 for managing a stop history with respect to each program file can be provided in the HDD 120, according to an embodiment of the present invention. In this case, the stop history with respect to each program file can denote recording information with respect to a portion of the program file where playback of a selected program file, among the plurality of program files stored in the HDD 120, is stopped by the received playback stop instruction, while the program file is being reproduced. In this case, the playback may be stopped when a pause instruction is received, when a stop instruction is received, or when a power supply is intentionally turned off, for example.

Alternatively, when several users watch the same program at different times, respectively, the portions of the program file where the playback has been stopped, for each user, may be different, so the playback start positions for each user may be different even in the same program. Accordingly, all information about portions of the program file, or alternate program files, is recorded to allow a playback restart position to be readily searched is recorded.

Below, Table 1 illustrates an example of a stop history management table 122 recorded in the HDD 120.

**Table 1**

| | Stopped position | Reproduced time | Remaining time | Stopped date |
|---|---|---|---|---|
| 1 | Address 1 | 00:30:00 | 01:00:00 | 2004.07.11 AM 11:30 |
| 2 | Address 2 | 01:00:00 | 00:30:00 | 2004.07.01 PM 5:34 |
| 3 | Address 3 | 01:10:00 | 00:20:00 | 2004.06.20 PM 1:05 |
| . | . | . | . | . |
| . | . | . | . | . |

Here, Table 1 shows a stop history management table with respect to one program, for example. Referring to the table 1, the stop history information stored in the stop history management table 122 can include information about a playback position when a playback stop is requested, namely, the position where the playback is stopped, information about a reproduced time until the playback of the selected program is stopped in the total playback time, information about a time to be reproduced, namely, a remaining time, and information about the date and time when the playback stop was requested. In this case, the information about the stopped position can relate to a sector position where a stopped image corresponding to the playback stopped position is stored.

Alternatively, the stop history management table 122 can be recorded in an allocated region of the data recording region of the HDD 120, however, embodiments of the present invention are not limited thereto, e.g., the table may also be stored in a separate recording medium.

The AV CODEC 125 can decode the AV signal output from the VCR deck unit 110, the DVD deck unit 115, and the HDD 120, and can further output the decoded signal. A brief description for a decoding operation of the AV CODEC 125 will now be set forth. First, the AC CODEC 125 may not separately perform signal processing on the AV signal input from the VCR deck unit 110 and bypass the signal to the video encoder 135. On the contrary, when the AV signal is received from the DVD deck unit 115 or the HDD 120, the AV CODEC 125 can separate the AV signal input from the DVD deck unit 115 or the HDD 120 into a video signal and an audio signal, and decode and output the video signal and the audio signal which may be encoded with a predetermined compression format. The video signal decoded by the AC CODEC 125 can then be output to the video encoder 135, with the decoded audio signal being output to the audio DAC 145.

The SDRAM 130 can be a memory device used for temporarily storing the AV signal when data is decoded in the AV CODEC 125.

The video encoder 135 can encode the digital video data input from the AV CODEC 125 and output the encoded data to the video output terminal 140.

The audio DAC 145 can convert the digital audio signal input from the AV CODEC 125 into an audio signal and output the converted signal to the audio output terminal 150.

The AV signal processed by the video encoder 135 and the audio DAC 145 can be provided to a sound output unit, such as a speaker, and a video display unit, such as a cathode ray tube (CRT) and a liquid crystal display (LCD), through the video output terminal 140 and the audio output terminal 150, respectively.

The front panel 160 can be a user interface for receiving operation instructions for setting or selecting operations supported by the program file reproducing apparatus 100. To this end, a key pad 162 having various keys, and an infrared (IR) light-receiving unit 164 for receiving an ultrared signal emitted from a remote control 200, as an external input device, can be prepared in the front panel 160, noting that embodiments of the present invention are not limited thereto.

The GUI generation unit 170 can provide an information screen required for building a GUI environment, according to an embodiment of the present invention. To this end, several information screens associated with selecting operations or setting environment of the reproducing apparatus 100 can be stored in the GUI generation unit 170. The GUI generation unit 170 can thus generate the information screen required by a user, under control of the system controller 190, and output the screen, according to an embodiment of the present invention. For example, the GUI generation unit 170 may generate a program list screen with respect to a selected program among a program list and programs of the program list stored in the HDD 120, under control of the system controller 190, for example. The program list screen generated by the GUI generation unit 170 can be provided to the video display unit, through the video encoder 135 and the video output terminal 140, and then displayed.

The flash memory 180 may store various control programs associated with performing the operation of the system controller 190, an operating system, and various application programs, for example.

The system controller 190 correspondingly can process various functions supported by a loaded program stored in the flash memory 180 in response to the user operating signals received through the front panel 160, for example. The system controller 190 can have the playback operation performed on the data recorded on a magnetic tape mounted in the VCR deck unit 110, have the playback operation performed on the data recorded on a DVD mounted in the DVD deck unit 115, or have the playback operation performed on the program file recorded in the HDD 120 in response to a playback mode of the reproducing apparatus 100.

Hereinafter, a control procedure of the system controller 190 will be described in greater detail in response to a key selection of the remote control 200 as an external input device of the reproducing apparatus 100, according to an embodiment of the present invention.

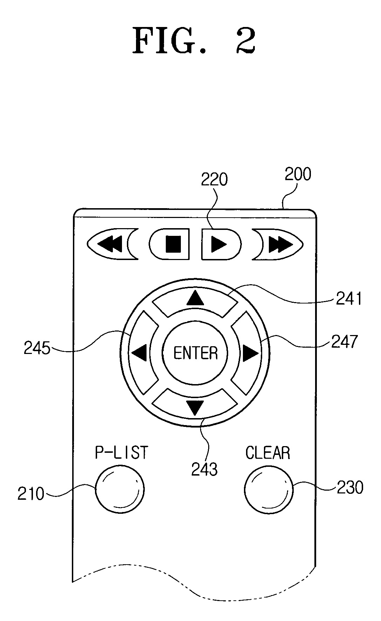

As illustrated in FIG. 2, a program list key 210 requesting a list with respect to the program file stored in the HDD 120, a playback key 220 requesting the playback of the specific program, a clear key 230 resetting the stop history information stored in the stop history management table 122, and respective up, down, right, and left direction keys 241, 243, 245, and 247 can be prepared in the remote control 200, according to an embodiment of the present invention. In this case, the clear key 230 can be a key resetting stored stop history information when at least a predetermined number of stop histories are present for one program. Alternatively, when the clear key 230 is selected, all of the stop history information stored in the stop history table may not be removed, as described above, but rather only some of the stored stop history information may be removed in a first-in first-out (FIFO) manner, for example.

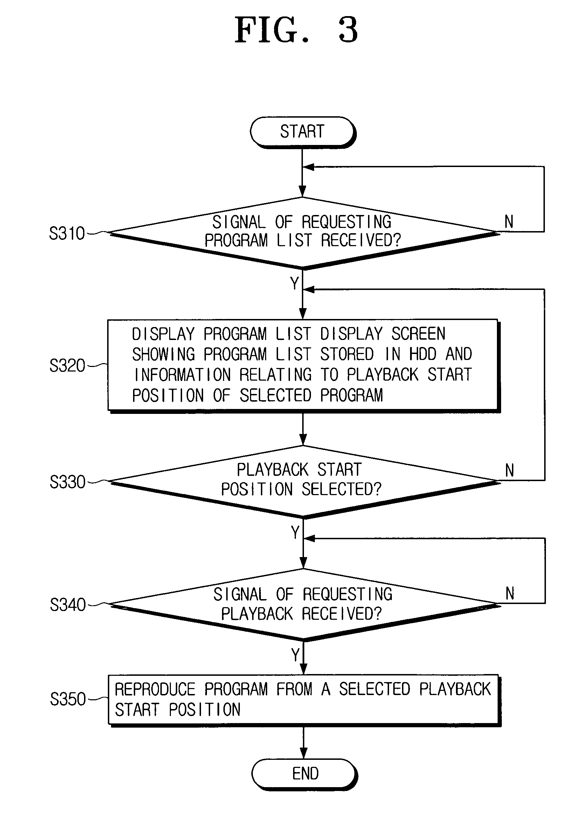

FIG. 3 is a flowchart for reproducing a program file stored in a HDD, according to an embodiment of the present invention.

Referring to FIG. 3, when a signal for requesting a program list is received, e.g., from the remote control 200 through the IR light-receiving unit 164 (S310), the system controller 190 may process a program list display screen to be displayed on the video display unit. A program list stored in the HDD 120, and information with respect to a playback start position of any one program selected from the program list can then be displayed in the program list display screen (S320).

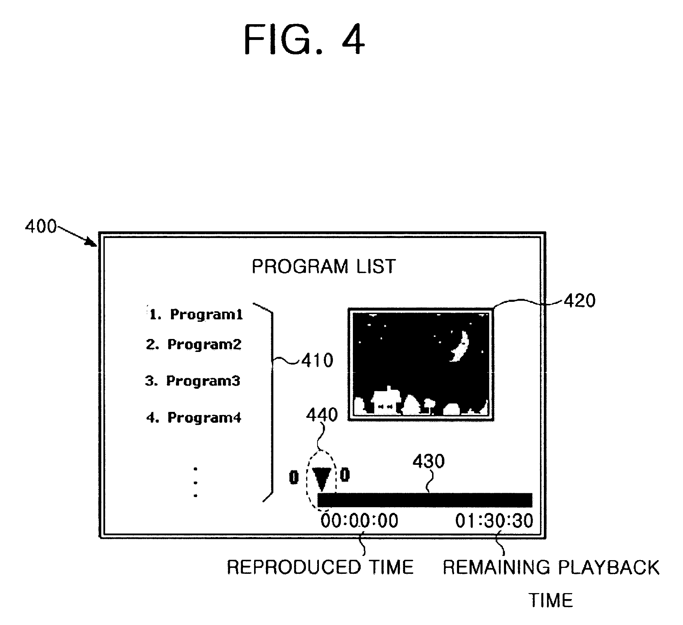

FIG. 4 illustrates an example of a program list screen to be displayed, e.g., when the program list key is selected.

As illustrated in FIG. 4, the program list 410 stored in the HDD 120, and information indicating a playback start position of a program selected from the program list 410 can be displayed in the program list screen 400. That is, a thumbnail image 420 corresponding to a first playback start position of the program selected from the program list 410, a bar type graph 430 indicating a total length of the selected program, and a position indicator 440 indicating the first playback start position, where the thumbnail image 420 is present in the graph 430, can be displayed in the program list screen 400. In addition, information with respect to the reproduced time until a signal of requesting the playback stop, as well as information with respect to the remaining playback time, can be displayed in the program list screen 400.

In this case, information representing the playback start position can be generated based on the stop history information recorded in the stop history management table 122 of the HDD 120.

This is because the previous playback stop position can now become the current playback start position. The thumbnail image 420 displayed in the program list screen 400 can be an image of a still screen extracted corresponding to the first playback start position, e.g., an corresponding nearby Intra Frame Picture, i.e., a frame where compression is not performed between frames.

In addition, the first playback start position can be the position where a stop date is the final among at least one stop position where the playback is stopped, that is, the position of the latest stop date. When at least one stop position is present in the selected program, information with respect to at least one second playback start position present in positions before and/or after the first playback start position is also displayed in the program list screen 400. For example, information with respect to the second playback start position can be displayed with a number of the second playback start positions present, as illustrated in FIG. 4.

Referring to FIG. 4, the first playback start position of "Program 1" is the first position in the total length of the program, which means that a stop history is not present in the "Program 1." Accordingly, information with respect to the second playback start positions present before and after the first playback start position is denoted by a zero.

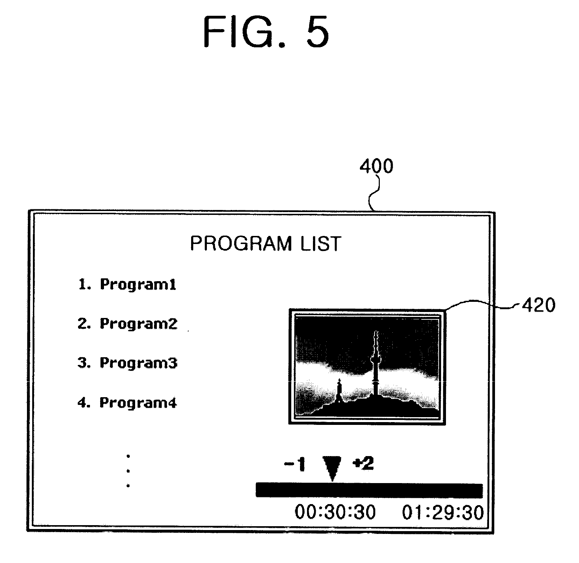

Alternatively, users may operate up and down direction keys 241 and 243, for example, provided on the remote control 200 to select a desired program to be reproduced in the programs list screen 400. When the desired program to be reproduced is selected as "Program 2," e.g., by operating the up and down direction keys 241 and 243 provided on the remote control 200, the program list screen 400 can be changed, as illustrated in FIG. 5.

That is, the thumbnail image 420 displayed in the program list screen 400 can be changed to a thumbnail image corresponding to a second playback start position of "Program 2." In addition, it can be seen that a position of the position indicator 440, indicating the first playback start position, and information of the second playback start positions present before and after the first playback start position are changed. Referring back to FIG. 4, it can be seen that two playback start positions are present in a reverse direction of playback order and one playback start position is present in a forward direction of the playback order with the first playback start position being a reference.

In this case, using the right and left direction keys 245 and 247, for example, provided in the remote control 200, the first playback start position may be moved to any one of a plurality of second playback start positions present before and after the first playback start position. That is, a playback start position may be moved in a reverse direction of the playback order when the left direction key 245, e.g., provided in the remote control 200, is selected, whereas a playback start position may be moved in a forward direction of the playback order when the right direction key 247, e.g., provided in the remote control 200, is selected.

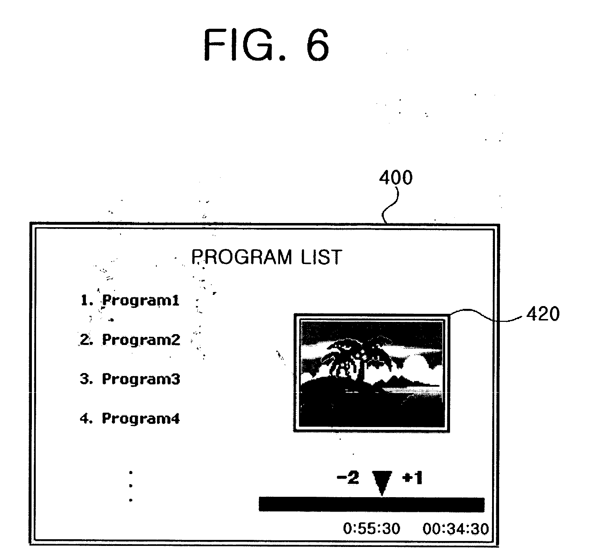

When the playback order is moved in a forward direction by one step, for example, from the first playback start position of "Program 2", as shown in FIG. 6, the thumbnail image 420 can again be changed to a thumbnail image corresponding to the moved playback start position, and information of the second playback start position can be changed from (-1, +2) to (-2, +1).

As such, the left and right direction keys 245 and 247, provided in the remote control 200, may be operated to select a playback start position. When a signal requesting the playback is received, e.g., after users have selected the playback start position (S330 and S340), the system controller 190 can process the program to be reproduced from the playback start position selected (S350). For example, as illustrated in FIG. 4, the playback start position cannot be changed in the case of "Program 1", so "Program 1" is reproduced from the beginning, in response to the signal of requesting the playback. On the other hand, three second playback start positions, other than the first second playback start position, are present in the case of "Program 2", so that users may check the thumbnail image 420 displayed on the program list screen 400 to select the playback start position.

Above, embodiments of the present invention have been described with the programs being stored in the HDD 120, however, embodiments of the present invention are not limited thereto, but may also be applied to the case of reproducing a program recorded in a recording medium such as an optical disk.

In addition, the stop history management table 122 has been described as being managed on a per program basis, so that the stop history information of several users with respect to the selected program file are all displayed in the program list screen 400, however, embodiments of the present invention are not limited thereto. That is, it should also be apparent that the stop history management table 122 may be managed on a per program and user basis, so as to allow the stop history information for each user to be displayed in the program list screen 400.

According to an embodiment the present invention as mentioned above, upon the request of a program list stored in a recording medium, capable of being randomly accessed, information with respect to at least one playback start position is displayed, generated based on the stop history information, so that each user may readily select a desired playback start position. That is, a thumbnail image corresponding to the playback start position can be provided in the program list screen, so that the user may select the playback start position while comparing the thumbnail images, allowing the user to readily select the playback position where he/she may have watched in the past.

Not only can the thumbnail image be displayed but also information of the position where the thumbnail image is present, in the total length of the selected program, can also be displayed so that users may readily recognize that a desired portion to be watched by the users is in a forward direction or a reverse direction of the playback order based on the information with respect to the position of the thumbnail image.

In addition to the above described embodiments, embodiments of the present invention can also be implemented through computer readable code/instructions in/on a medium, e.g., a computer readable medium. The medium can correspond to any medium/media permitting the storing and/or transmission of the computer readable code.

The computer readable code can be recorded/transferred on a medium in a variety of ways, with examples of the medium including magnetic storage media (e.g., ROM, floppy disks, hard disks, etc.), optical recording media (e.g., CD-ROMs, or DVDs), and storage/transmission media such as carrier waves, as well as through the Internet, for example. The media may also be a distributed network, so that the computer readable code is stored/transferred and executed in a distributed fashion.

Although a few embodiments of the present invention have been shown and described, it would be appreciated by those skilled in the art that changes may be made in these embodiments without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A reproducing apparatus (100), comprising:
a first storage (120) to store a plurality of program files;
a second storage (120) to store stop history information corresponding to each of the program files;
a screen generation unit (135) to generate a program list screen (400) displaying a list of the plurality of the program files and information of a playback start position of any one program file selected from the program list screen;
a display unit (140) to display the generated program list screen; and
a controller (190) to control the program list screen to be displayed on the display unit upon receipt of a signal requesting the program list screen, the program list screen including a thumbnail image (420) corresponding to a first playback start position of the selected program file, generated based on the list of program files and corresponding stop history information, and information of a first playback start position corresponding to the thumbnail image and a total length of the selected program file.

2. The reproducing apparatus (100) of claim 1, further comprising an input unit (200) for initiating the signal requesting the program list screen and/or selecting the one program file from the program list screen.

3. The reproducing apparatus (100) of claim 2, wherein the input unit (200) is a remote control.

4. The reproducing apparatus (100) of any preceding claim, wherein the corresponding stop history information includes information of the playback stop position of the selected program file, information of reproduced time until a corresponding playback was stopped for the selected program file, and information of a date and time when the corresponding playback stop of the selected program file was requested.

5. The reproducing apparatus (100) of claim 4, wherein the first playback start position is where corresponding date and time information is latest among other stop positions where playback was stopped.

6. The reproducing apparatus (100) of any preceding claim, wherein the controller (190) processes information of at least one second playback start position present before and/or after the first playback start position, to be displayed in the program list screen (400), when at least one stop position is present in the selected program.

7. The reproducing apparatus (100) of claim 6, wherein the controller (190) controls the thumbnail image displayed on the program list screen to be changed to a thumbnail image (420) corresponding to another playback start position upon receipt of a signal requesting a move to any one of the at least one second playback start positions.

8. The reproducing apparatus (100) of any preceding claim, wherein the first storage (120) is a hard disk drive separate from the second storage.

9. The reproducing apparatus (100) of claim 8, wherein the second storage (120) is an allocated region of a recording area of the hard disk drive.

10. The reproducing apparatus (100) of any preceding claim, further comprising an AV codec (125) to output the one selected program file to a video output terminal (140) and/or an audio output terminal (150).

11. A method of reproducing a program, comprising:
requesting a list of programs stored in a randomly accessible storage (120);
generating a program list screen (400) displaying a list of the programs stored in the storage, a thumbnail image (420) corresponding to a first playback start position of any one program selected from the list of programs, and information corresponding to a position of the thumbnail image relative to a total length of the selected one program; and
displaying the generated program list screen.

12. The method of claim 11, further comprising applying a signal from an input unit (200) for initiating a signal requesting the program list screen and/or selecting the one program from the program list screen.

13. The method of claim 12, further comprising applying the signal from the input unit (200) remotely.

14. The method of any one of claims 11-13, wherein information of the first playback start position is generated based on stop history information corresponding to the selected program.

15. The method of claim 14, wherein the stop history information includes information of a position where a playback of the selected program was stopped, information of reproduced time until the playback of the selected program was stopped, among a total length of the selected program, and information of date and time when the playback stop of the selected program was requested.

16. The method of claim 15, wherein the first playback start position corresponds to a latest stopped date and time among at least one stop position of the selected program.

17. The method of any one of claims 11-15, wherein the program list screen (400) further includes information of at least one second playback start position present before and/or after the first playback start position.

18. The method of claim 17, wherein the thumbnail image (420) displayed on the program list screen (400) is changed to a thumbnail image corresponding to a changed playback start position of any one of the at least one second playback start position.

19. The method of any one of claims 11-18, further comprising outputting the one selected program to a video output terminal (140) and/or an audio output terminal (150).

20. At least one medium comprising computer readable code implementing the method of any one of claims 11-19.
